# EUROPEAN PATENT APPLICATION

(11) **EP 4 768 175 A1**
(43) Date of publication of application: **01.07.2026**
(21) Application number: 25812614.3
(22) Date of filing: 12.05.2025
(51) Int. Cl.: B23Q 17/00, B23Q 1/00, B23Q 11/08, G05B 19/4063

(54) **MACHINING CENTER**

(30) Priority: 10.09.2024 JP 2024156634
(71) Applicant: Kitamura Machinery Co., Ltd., Takaoka-shi, Toyama 939-1192 (JP)
(72) Inventor: KITAMURA, Akihiro, Takaoka-shi, Toyama 939-1192 (JP); KITAMURA, Kosaku, Takaoka-shi, Toyama 939-1192 (JP); TANADA, Toshihisa, Takaoka-shi, Toyama 939-1192 (JP)
(74) Representative: Patentanwälte Ruff, Wilhelm, Beier, Dauster & Partner mbB
(86) International application number: PCT/JP2025/017216
(87) International publication number: WO 2026/058496

(57) **Abstract**

To provide a machining center that includes an LED display mechanism that displays an operation status of a machine tool in more detail and that is more easily visible from a wider area outside the machining center than a conventional technique, the machining center includes a light emitting diode (LED) display mechanism including a light emitting unit in a part of a front area of a front cover portion that is included in an upper portion of an exterior cover enclosing an outer periphery of the machine tool, the light emitting unit includes a slit hole perforated in an elongated shape in a horizontal direction in the exterior cover, and an LED tape fixing plate that is attached so as to close the slit hole from the inside along an entire length of the slit hole, and holds an RGB-LED tape light along an entire length of the RGB-LED tape light, a lower end surface of an upper opening edge of the slit hole forms a first reflective surface that reflects light from the RGB-LED tape light downward, and an inclined surface of the LED tape fixing plate forms a second reflective surface that reflects and diffuses the light from the RGB-LED tape light downward and forward.

## Description

### [Technical Field]

The present invention relates to a machining center including an LED display mechanism indicating an operation status of a machine tool in at least a front surface area of an exterior cover of the machine tool.

### [Background Art]

The machine tool performs a cutting process on a workpiece placed on a machining table in a machining section by controlling driving of a rotating spindle to which various tools are interchangeably attached. During the machining process, cutting waste and cutting fluid are vigorously scattered around.

Normally, the exterior cover formed by sheet metal processing is provided to enclose at least a machining compartment as a splash guard to prevent such cutting waste and cutting fluid from scattering outside the machining compartment. The exterior cover also functions as a safety cover to prevent danger such as approaching or coming into contact with the machining section during operation.

In addition, there is a machining center having a method in which the workpiece placed on one side is rotated and thus transported to the machining table on the other side. In this case, the exterior cover includes, in the front surface area facing a swiveling table, an opening and closing door for accessing the swiveling table to perform work such as placing and removing the workpiece.

Meanwhile, in recent years, many machine tools are widely used in the form of the machining centers, which include a magazine that stores various tools and an automatic tool changer that changes the tool between the magazine and the rotating spindle of the machining section, and for which drive control is performed by a computer numerical control device, or a so-called computerized numerical control (CNC) device.

In such the machining center, an operation panel for a CNC device is disposed in one side surface area of the exterior cover, and the CNC device executes automatic operation of the machine tool in accordance with a predetermined NC machining program. That is, a predetermined cutting process is performed while the predetermined tool is automatically replaced at a predetermined timing on the rotating spindle of the machining section. Various types of products are formed by automatic operation of the machine tools using various NC machining programs.

Such the machining center generally has an integrated product configuration in which an entire structure that includes the machining compartment containing the machining section, a front compartment containing the swiveling table that transports the workpiece to the machining section, the automatic tool changer linked to the machining section, and the magazine is enclosed by the exterior cover. In addition, there is the machining center provided with a large red rotating warning light that light up when an abnormality occurs due to some kind of failure. However, the machining center that is normally automatically operated is completely enclosed by a cover, and thus it is difficult to visually grasp the operation status of the machining center from the outside.

Therefore, it is desirable for the machining center to be equipped with display means that allows a specific operation status of the machine tool, such as a state where the machine center is normally operating, preparing for operation, or has completed operation, to be easily determined from the outside, except when an abnormality occurs.

Therefore, the machining center has been developed, which is equipped with LED display means that is disposed on the front surface area of the exterior cover (guard) and including multiple types of light emitting diodes (LEDs) for emitting light in different colors, and that emitting light from the corresponding color LED according to operation statuses (for example, see Patent Literatures 1 and 2).

### [Citation List]

### Patent Literature

Patent Literature 1: Japanese Utility Model Registration No. 3178520
Patent Literature 2: Japanese Utility Model Registration No. 3179056
Patent Literature 3: Japanese Unexamined Patent Application Publication No. 2019-219784

### [Summary of Invention]

### [Technical Problem]

However, the above-described LED display means has a semicylindrical shape, protrudes from a surface of a guard, and is disposed on a side that does not interfere with opening and closing of a sliding door, and thus the LED display means emits light **from** one place and almost only forward. Therefore, the range of angles at which the LED display means can be seen from the outside is limited, and an area of the LED display means that is cannot be seen in all directions around the outer periphery of the machining center is larger.

Patent Literature 3 discloses, as an operation state notifying device, a device provided with a full-color LED on the top of a housing having therein a machining area for the machine tool. However, this lighting device only emits light upward, and the light can be seen if the top of the lighting device is low, but if the lighting position is above a certain height, it is necessary to look up from below to check and it becomes difficult to see the lighting device.

In particular, a recent machining center includes devices such as a tool storage magazine and the automatic tool changer, and these devices protrude upward in a complex manner, the machine tool is enclosed by a high cover in many cases. Therefore, in the machining center that is enclosed by such a high cover and occupies a large overall area, if an LED lighting device is installed somewhere outside the top surface area, it is very difficult to clearly see the LED lighting device when looking up from below, making it impractical for grasping the operation status of the machine tool.

An object of the present invention is to provide the machining center including the LED display mechanism that displays an operation status of the machine tool in detail in a state where the LED display mechanism is easier to see from a wider area outside the machining center than the conventional techniques.

### [Solution to Problem]

To achieve the above-described object, there is provided the machining center according to the present invention that includes a computerized numerical control (CNC) device that performs numerical control on the machine tool, the machining center including
a light emitting diode (LED) display mechanism including a light emitting unit in a part of the front surface area of the front cover portion that is included in an upper portion of an exterior cover enclosing an outer periphery of the machine tool and encloses at least a front compartment of the machine tool in a substantially U-shaped manner, in which
the LED display mechanism includes, as the light emitting unit,
   a slit hole perforated in an elongated shape in a horizontal direction in the exterior cover,
   an LED tape fixing plate attached so as to close the slit hole from an inside of the exterior cover along an entire length of the slit hole, and
   an RGB-LED tape light that is held along an entire length of the LED tape fixing plate and includes a plurality of chip light emitting diodes each having a red LED, a green LED, and a blue LED embedded therein, arranged at a predetermined interval in a row,
the LED display mechanism includes LED power supply wiring for supplying power to the RGB-LED tape light, and a light color controller that causes the RGB-LED tape light to emit light in a plurality of different light colors that are preset according to various operation statuses of the machine tool,
the LED tape fixing plate has a horizontal bottom surface on which the RGB-LED tape light is attached via its back surface, and an inclined surface extending forward from a rear end side of the horizontal bottom surface in an inward direction of the exterior cover, and spanning over the RGB-LED tape light to a position above an upper edge of an opening of the slit hole, and
a lower end surface of the upper edge of the opening of the slit hole forms a horizontal and smooth first reflective surface that reflects light from the RGB-LED tape light downward, and the inclined surface forms a smooth second reflective surface that reflects and diffuses the light from the RGB-LED tape light downward and forward.

In the machining center having the above-described configuration, the RGB-LED tape light is installed to be received within the slit hole perforated in the exterior cover, but light emitted from the RGB-LED tape light is reflected downward toward the front of the exterior cover in an excellent manner by the first reflective surface and the second reflective surface of the LED tape fixing plate, and thus is sufficiently and reliably visible from outside the exterior cover.

That is, a part of light emitted from the RGB-LED tape light is reflected downward as sharp light by the horizontal and smooth lower end surface of the upper edge of the opening of the slit hole that forms the first reflective surface. At the same time as this, the other light emitted from the RGB-LED tape light is diffused and reflected forward from the exterior cover by the smooth inclined surface that serves as the second reflective surface extending forward from the rear end side of the horizontal bottom surface inside the exterior cover, and spanning over the RGB-LED tape light to the position above the upper edge of the opening of the slit hole. Therefore, even in a case where the installation position of the light emitting unit is high because the exterior cover itself is high, these two types of reflected light allow the LED light to reach a wide range from a position close to the exterior cover to a relatively far position, and the visibility from the outside is very high.

The light emitting unit by the RGB tape light is disposed in an elongated shape in the horizontal direction in at least the front surface area in the upper portion of the exterior cover, it is possible to see light emitted from the RGB-LED tape light from any place in a range in which the front surface of the exterior cover of the machining center is visible. Therefore, in the present invention, the color of LED light from the light emitting unit can be more reliably checked from a wider area where the front surface of the machining center is visible and the operation status of the machine tool can be grasped, compared to conventional LED display means.

In addition, the light emitting unit of the LED display mechanism according to the present invention is disposed inside the slit hole formed in the exterior cover by the LED tape fixing plate to which the RGB-LED tape light is attached inside the exterior cover, and thus a portion that protrudes outward from the surface of the exterior cover is not provided. Therefore, even if some object comes into contact with the exterior cover where the light emitting unit is located from the outside, the light emitting unit is unlikely to be damaged or affected. For example, in a case where the opening and closing door usually installed in the front surface area is of a sliding type, and the light emitting unit is disposed in the area on the side that is covered by the door in the open state, there is no problem with the sliding opening and closing of the door and the light emitting unit itself.

The elongated light emitting unit according to the present invention can be made longer and disposed on more side surfaces, thereby further improving the visibility. For example, if the light emitting unit is disposed at, at least one of left and right corners of the front cover portion, the light emitting area becomes wider because even one light emitting unit spans two side surfaces that form the corner. In this case, the slit hole is formed in an L shape in the horizontal direction and extends continuously across the two side surfaces that are perpendicular to each other at the corner, and the LED tape fixing plate may be attached in a substantially L shape so as to close the slit hole over its entire length.

The RGB-LED tape light used in the present invention can be a commercially available product, and can be easily prepared. A general LED tape light has a number of RGB chip LEDs mounted on a tape-shaped substrate together with wiring at a predetermined interval, and a terminal connector attached to a wiring cord extending from an end contact thereof, and is connected to a power source via a DC jack or the like.

Each RGB chip LED has, embedded therein, light emitting diodes (LED) of three primary colors of light, red (R), green (G), and blue (B). The RGB-LED tape light can emit light of different light colors by adjusting a current flowing through each of the R, G, and B LEDs.

The RGB-LED tape light usually has the light emitting unit disposed on the front and is installed by being adhered to an intended location via its the back surface, wherein some commercially available products are provided with double-sided adhesive tape on the back surface. Therefore, by using this adhesive tape, the RGB-LED tape light can be easily attached to the LED tape fixing plate by its back surface secured. In a case where the adhesive tape is removable, the RGB-LED tape light itself can be easily removed. This facilitates replacement of the RGB-LED tape light when the RGB-LED tape light degrades over time or fails.

In addition, there is also a tube-type product in which the front of a tape is covered with a waterproof cover. This cover is usually made of a flexible, milky white silicon material or the like, and dot-like light emitted from each chip is softened by the diffusing effect of the cover material. In the present invention, since the RGB-LED tape light is disposed in the exterior cover that prevents the scattering of cutting waste and cutting fluid generated during operation of the machine tool, a tube-type RGB-LED tape light with such the waterproof cover is suitable.

Typically, a commercially available RGB-LED tape light is provided with a controller that is connected between the tape light and a power source via the DC jack. This controller adjusts a current to each color LED in accordance with an input control signal, thereby controlling the light color to a predetermined color. Therefore, such a controller can be incorporated and used as the light color controller to the present invention.

Two types of control methods are available for adjusting the light color: a full-color type that allows for continuous light color change mainly by adjusting the current level flowing through each color LED, and a type that selectively switches between multiple different light colors by switching the power supply to each color LED on and off based on a selection from different combinations of the three color LEDs.

In the machining center according to the present invention, obtaining light colors corresponding to several operation statuses of the machine tool is sufficient, so the switching type suffices. In this case, a control signal may be any signal that controls the on and off state of the current to each color LED in accordance with a combination of color LEDs preset to achieve a light color for each operation status.

The CNC device of the machining center automatically operates the machine tool by the controller according to tool information pre-stored in a storage unit and a preset NC machining program. When the above-mentioned switching type is adopted, the controller is provided with a light color control signal generator that outputs a light color control signal corresponding to each light color that commands the light color controller to emit different light colors preset corresponding to each operation status of the machine tool.

Therefore, the light color controller is connected between the RGB-LED tape light and the LED power supply wiring, and changes the combinate ion of LEDs that emit light by switching the power supply on and off to the red LED, the green LED, and the blue LED in accordance with the light color control signal input from the light color control signal generator, thereby changing the light color.

According to the control signal that passes current only to the red LEDs, the entire tape light emits red light by single lighting of the red LEDs, and according to the control signal that passes current only to the green LEDs, the entire tape light emits green light by single lighting of the green LEDs. To cause the entire tape light to emit yellow light, the control signal that causes a current of a similar level to flow through each of the red and green LEDs may be input, and to cause the entire tape light to emit white light, the control signal that causes a current to flow through all color LEDs and turns all the LEDs on may be input. These light colors can then be made to correspond to the operation statuses of the machine tool.

With this configuration, during the automatic operation process of the machine tool controlled by the CNC device, the light color control signal corresponding to the operation status is output in each operating process, and the color of light of the light emitting unit in the LED display mechanism is automatically changed in conjunction with a change in the operation status of the machine tool.

In the present invention, the light color control signal that commands the adjustment of the color of light of the light emitting unit according to the operation status and that needs to be output from the light color control signal generator of the control unit of the CNC device includes the following. That is, the light color control signal includes a first light color control signal for commanding adjustment to a light color indicating a power-on state during a non-machining operation of the machine tool, a second light color control signal for commanding adjustment to a light color indicating that the machine tool is performing a machining operation, a third light color control signal for commanding adjustment to a light color indicating a completed state of the machining operation of the machine tool, and a fourth light color control signal for commanding adjustment to a warning light color indicating an alarm occurrence state in the machine tool. This allows the operation statuses of the machine tool that should be grasped to be distinguished and visible as the different light colors of the LEDs.

Most commercially available RGB-LED tape lights can be cut at a specified pitch, and can be cut to any length depending on the installation area and used. When the RGB-LED tape light is cut for use, the wiring cord having the terminal connector can be connected and used by soldering to a contact point at a cut end. Further, the RGB-LED tape lights disposed in multiple different locations are each connected to the controller via a commercially available branch box provided with branch wiring, allowing all the RGB-LED tape lights to be synchronized and perform the same light color adjustment by the same controller.

Therefore, in the machining center according to the present invention, even in a case where the RGB-LED tape lights are disposed as the light emitting units not only on a portion of the exterior cover, but also on one or more of each side surface of the exterior cover, or on one or more or all of the four corners of the exterior cover, the RGB-LED tape lights can perform light color adjustment in synchronization with each other.

For example, in a case where a relatively small machining center in which a width of the front surface area is short and the opening and closing door is located near one of left and right corners of the front cover portion is used, it is efficient and practical to dispose the light emitting unit only in the other of the left and right corners. Meanwhile, if the width of the front surface area is relatively large and there are sufficiently large areas on both the left and right sides of the opening and closing door, it is sufficient to arrange the light emitting units in each of the corner areas on both the left and right sides of the front cover portion.

The exterior cover is formed according to the configuration of the target machine tool by sheet metal processing using a steel material such as general structural rolled steel such as SS400, hot rolled mild steel (SPHC), or cold rolled steel (SPCC) as a material. Therefore, the slit hole that constitutes the light emitting unit of the LED display mechanism according to the present invention can also be formed during this exterior cover forming process.

The LED tape fixing plate according to the present invention is provided so as to close the slit hole in the exterior cover and constitutes a part of the splash guard, and thus it is desirable that the LED tape fixing plate have strength similar to that of the exterior cover itself. Therefore, it is preferable to form the LED tape fixing plate from the steel material similar to that of the exterior cover and fix the LED tape fixing plate to the inside of the slit hole by welding or the like. In addition, the LED tape fixing plate can also be fixed using an adhesive for metal. Such an LED tape fixing plate is sufficient if the horizontal lower end surface of the upper edge of the opening of the slit hole that serves as the first reflective surface, and the inclined surface that serves as the second reflective surface are smooth and can reflect LED light well.

Further, in a case where the machining center is large and the distance between the front and rear surface sides is large, making it difficult to see from the rear surface side with only the light emitting unit on the front surface side, the light emitting unit is disposed on one or both of the left and right corner areas on the rear surface side in addition to the front surface side, and blind spots are almost eliminated.

In addition, the RGB-LED tape light in the present invention is not limited to being installed in a single line on the horizontal bottom surface of the LED tape fixing plate, but can also be arranged in two lines, provided that the horizontal bottom surface of the LED tape fixing plate has a width sufficient to secure the required installation area.

### [Advantageous Effects of Invention]

In the machining center according to the present invention, as described above, the RGB-LED tape light that serves as the light emitting unit of the LED display mechanism is disposed in an elongated shape in the horizontal direction on at least a portion of the front surface area of the upper portion of the exterior cover such that light is emitted downward from inside the slit hole, and thus it is possible to suppress the impact of external interference on the light emitting unit, and to see light emitted from the RGB-LED tape light from any position within the viewing range of the front surface of the machining center. Therefore, the present invention achieves the effect of more reliably checking the light color of the light emitting unit than the conventional techniques, and facilitating the grasping of the operation status of the machine tool.

### [Brief Description of Drawings]

Fig. 1 is a front perspective view illustrating a machining center according to an embodiment of the present invention.
Fig. 2 is a cross-sectional view taken along line A-A illustrated in Fig. 1.
Fig. 3 is an explanatory diagram illustrating a configuration of a light emitting unit of the machining center illustrated in Fig. 1.
Fig. 4 is a block diagram illustrating a schematic configuration of the machining center illustrated in Fig. 1.
Fig. 5 is a rear perspective view illustrating the machining center illustrated in Fig. 1.
Fig. 6 is a front perspective view illustrating the machining center according to an embodiment different from Fig. 1.
Fig. 7 is a front perspective view illustrating the machining center in which the shape of the light emitting unit is different from that in Fig. 1.
Fig. 8 is a cross-sectional view illustrating a configuration of each light emitting unit illustrated in Fig. 7.

### [Description of Embodiments]

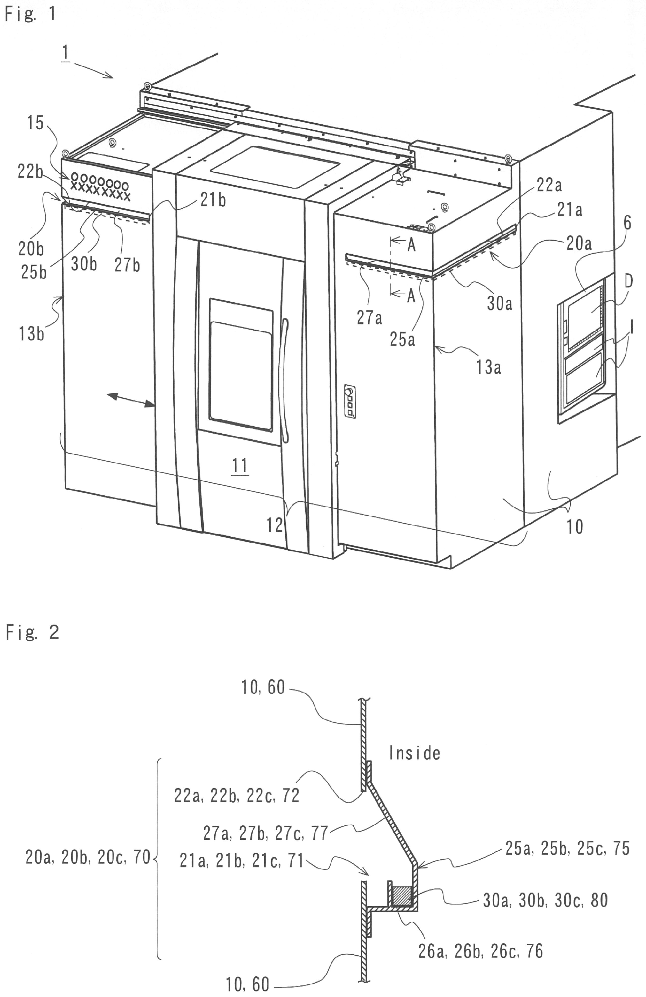

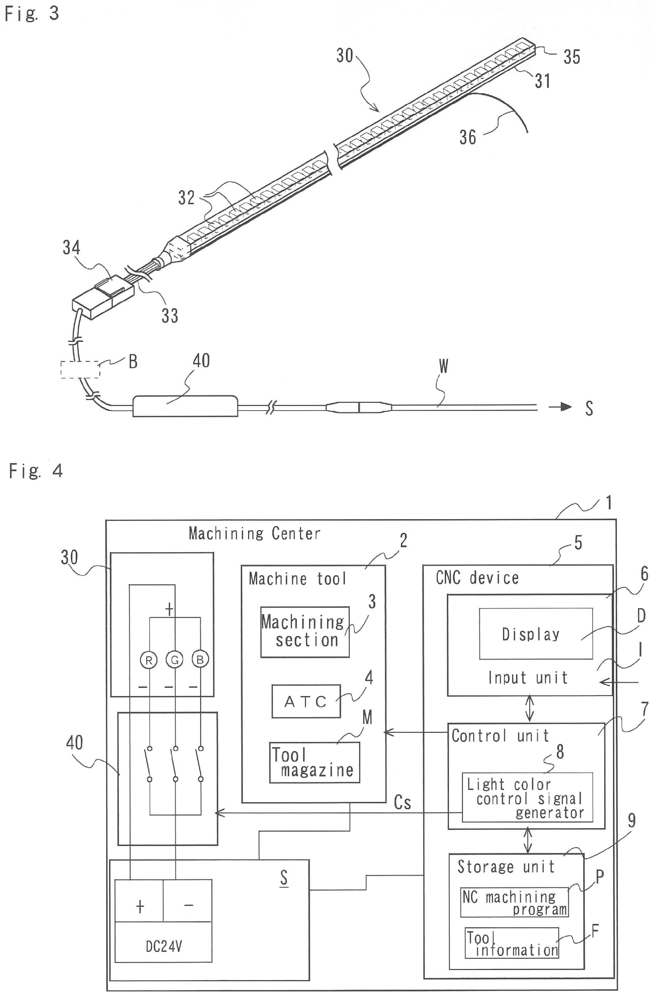

Figs. 1 to 4 illustrate a machining center 1 according to an embodiment of the present invention. Fig. 1 is a front perspective view illustrating the machining center 1, and Fig. 2 is a cross-sectional view taken along line A-A illustrated in Fig. 1. Fig. 3 is an explanatory diagram illustrating a configuration of the light emitting unit in the present embodiment, and Fig. 4 is a block diagram illustrating a schematic configuration of the machining center 1.

In the machining center 1 according to the present embodiment, a machine tool 2 includes an automatic tool changer 4 and a tool magazine M storing a plurality of types of the tools. The swiveling table that transports the workpiece to a machining section 3 is disposed in a front compartment, and the entirety of these components is enclosed in a substantially rectangular shape by an exterior cover 10.

A slidable opening and closing door 11 is provided at a front central part of a front cover portion 12 included in the exterior cover 10, said front cover portion 12 surrounding the front compartment in a substantially U-shape. Work such as placing the workpiece on the swiveling table and retrieving the workpiece is performed through this opening and closing door 11. On a side surface of the exterior cover 10, an operation panel 6 of a CNC device 5 that numerically controls the machine tool 2 is disposed, as in a conventional technique.

The operation panel 6 is provided with a touch panel display D, on which a menu screen is displayed. The menu screen displays various work operation mode items for the machine tool 2 that are pre-installed in the CNC device 5, in a selectable state, for example, as icons. Around the display D, an input/output unit for various data, such as a USB port, is disposed, and as an input unit I, a keyboard including a mouse pad and mouse buttons is arranged below the display D. Further below the input unit I, various switches and buttons related to various operations of the machine tool 2 are disposed.

To cut the workpiece and obtain a desired product, in a required work operation mode selected on the menu screen, a control unit 7 of the CNC device 5 performs required operations such as setting of tool information F stored in a storage unit 9 and relating to each of the tools stored in the tool magazine M, various settings for a rotation shaft in the machining section 3, and selection and edit of an NC machining program P. After the required settings are completed, the control unit 7 causes the machining section 3 to perform a predetermined automatic operation using the tool information F in accordance with the NC machining program P set in advance. Therefore, the workpiece is transported from the swiveling table onto a rotary table of the machining section 3 and predetermined cutting is performed on the workpiece.

The machining center 1 according to the present embodiment includes the LED display mechanism that allows the operation status of the machine tool 2 to be visually observed from outside when cutting is performed using the machine tool 2 as described above. That is, light emitting units (20a, 20b) of the LED display mechanism are disposed in upper areas of left and right corners (13a, 13b) of the opening and closing door 11 of the front cover portion 12 among front, rear, left, and right corners of the exterior cover 10.

The light emitting units (20a, 20b) mainly include L-shaped slit holes (21a, 21b) perforated continuously in an elongated shape in a horizontal direction from the front sides of the corners (13a, 13b) to the right and left sides, LED tape fixing plates (25a, 25b) attached so as to close the slit holes (21a, 21b) from the inside of the exterior cover 10 over entire lengths of the slit holes, and RGB-LED tape lights (30a, 30b) held in an L shape over their entire lengths on the LED tape fixing plates (25a, 25b), respectively.

Each LED tape fixing plate (25a, 25b) include a horizontal bottom surface (26a, 26b) on which the RGB-LED tape light (30a, 30b) is affixed via a double-sided adhesive tape 36 by its back surface, and an inclined surface (27a, 27b) extending forward from the upper end of rising wall on rear end side of the horizontal bottom surface (26a, 26b) in the inward direction of the exterior cover, and spanning over the RGB-LED tape light (30a, 30b) to a position above the lower end surface (22a, 22b) of the upper edge of opening of the slit hole (21a, 21b).

The LED tape fixing plates (25a, 25b) according to the present embodiment is made of the same steel material as those of the exterior cover 10. Although the slit holes (21a, 21b) are formed in a process of manufacturing the exterior cover 10 by sheet metal processing, the LED tape fixing plates (25a, 25b) can be attached after the formation of the slit holes (21a, 21b) in the process of manufacturing the exterior cover 10.

In the light emitting units (20a, 20b) according to the present embodiment, the lower end surfaces of the upper edges of the openings of the slit holes (21a, 21b) form horizontal and smooth first reflective surfaces (22a, 22b) that reflect light from the RGB-LED tape lights (30a, 30b) downward. The first reflective surfaces (22a, 22b) allow the reflected narrow and sharp LED light to be radiated downward.

The inclined surfaces of the LED tape fixing plates (25a, 25b) form smooth second reflective surfaces that reflect and diffuse light from the RGB-LED tape lights (30a, 30b) downward and forward. By means of these second reflective surfaces (27a, 27b), the LED light is broadly irradiated to the area below and around the exterior cover 10.

These two types of reflected light allow the color of the LED light from the RGB-LED tape lights (30a, 30b) to be clearly visible regardless of whether it is close to the exterior cover 10 or far from the exterior cover 10. As long as a wall surface of the exterior cover 10 on which the light emitting units (20a, 20b) are disposed can be seen, the color of the LED light can be seen from a wide area out of all directions of the machining center 1, and thus it is possible to easily grasp the operation status of the machine tool 2 at that time without approaching the machining center 1.

The LED display mechanism according to the present embodiment includes LED power wiring W for supplying power to each of the RGB-LED tape lights (30a, 30b), and a light color adjuster 40 as the light color controller that causes each of the RGB-LED tape lights (30a, 30b), to emit light in a plurality of different light colors preset corresponding to various operation statuses of the machine tool 2.

The light color adjuster 40 controls the turning on and off of the power supply to each of color LEDs of the RGB-LED tape lights (30a, 30b) in accordance with a light color control signal Cs output from a light color control signal generator 8 disposed in the control unit 7 of the CNC device 5. This control allows the color LEDs or the combination thereof to emit LED light in a predetermined light color.

The RGB-LED tape lights (30a, 30b) incorporated in each the light emitting units (20a, 20b) of the present embodiment are those obtained by adjusting the same product of the RGB-LED tape light 30 to an appropriate length. The RGB-LED tape light 30 has a number of RGB chip LEDs 32 mounted on a tape-shaped substrate 31 together with wiring at a predetermined interval, and has a terminal connector 34 attached to a wiring cord 33 extending from an end contact thereof, and is connected to a power supply circuit S of the machine tool 2 via the DC jack or the like. Therefore, when a main power supply of the machine tool 2 is turned on, power is supplied to the RGB-LED tape lights (30a, 30b) at an appropriate voltage.

The RGB-LED tape light 30 used in the present embodiment is a tube-type product whose front side is covered with a flexible, milky white silicon waterproof cover 35. The waterproof cover 35 softens dot-like light emitted by each of the RGB chip LEDs 32 due to the diffusion effect of the cover material. Therefore, the light emitting units (20a, 20b) allow LED lighting to be uniform overall.

The RGB chip LEDs 32 is one in which individual light emitting diodes (LEDs) of the three primary colors of light, red (R), green (G), and blue (B), are embedded. Light emission of different colors is obtained in each of the RGB chip LEDs 32 by adjusting the current flowing through each of the red (R) LED, green (G) LED, and blue (B) LED.

In the present embodiment, the light color adjuster 40 is connected between each of the RGB-LED tape lights (30a, 30b) and the power supply circuit S via a branch box B for adding a tape light or the like. Therefore, the light color adjuster 40 adjusts the colors of light of the two RGB-LED strip lights (30a, 30b) in synchronization. In the present embodiment, by controlling the turning on and off of current supply to the wiring of each color LED, the color LEDs that emit light and the combination thereof can be changed to change the color of light.

In the RGB-LED tape lights (30a, 30b) according to the present embodiment, regarding the multiple RGB chip LEDs 32, the color LEDs of different colors are independent from each other and the color LEDs of the same color are connected in series, and the turned on and off of the current is adjusted synchronously.

The light color adjuster 40 turns on and off the current supply to the wiring of each of the color LEDs in response to the input of the light color control signal Cs that has been output from the light color control signal generator 8 of the control unit 7 of the CNC device 5 and commands a light color that is preset correseponding to each operation status of the machine tool 2.

In the present embodiment, for example, the light color control signal Cs set in advance includes a first light color control signal Cs1 for commanding adjustment to a light color indicating a power-on state during a non-machining operation of the machine tool 2, a second light color control signal Cs2 for commanding adjustment to a light color indicating that the machine tool 2 is performing a machining operation, a third light color control signal Cs3 for commanding adjustment to a light color indicating a completed state of the machining operation of the machine tool 2, and a fourth light color control signal Cs4 for commanding adjustment to a warning light color indicating the alarm state in the machine tool 2.

For example, it is possible to assign the color LEDs that emit light and the colors of the light from the combination thereof to each of these light color control signals Cs (Cs1 to Cs4), as shown in Table 1. Therefore, the light color adjuster 40 controls the turning on and off of the electrical connection of the wiring from each of the LEDs such that the color LEDs or the combination thereof emit light of the preset light colors in accordance with the input light color control signal Cs (Cs1 to Cs4).

**Table 1**

| Light color control signals | Adjusts the current supply to each color LED | | | Light color |
|---|---|---|---|---|
| | Red | Green | Blue | |
| Cs1 | ON | ON | ON | White color |
| Cs2 | OFF | ON | OFF | Green color |
| Cs3 | ON | ON | OFF | Yellow color |
| Cs4 | ON | OFF | OFF | Red color |
| | OFF | OFF | ON | Blue color |
| | ON | OFF | ON | Purple color |
| | OFF | ON | ON | Sky blue color |

That is, when a white color is assigned as a light color indicating the normal power-on state before the machining operation of the machine tool 2 or the like, the light color adjuster 40 turns on the electrical connections of all the wiring to the red LED, the green LED, and the blue LED, thereby energizing all the three color LEDs in response to the input of the first light color control signal Cs1. Therefore, the RGB-LED tape lights (30a, 30b) emit white light. In addition, when a green color is assigned as a light color indicating that the machine tool 2 is performing a machining operation, the light color adjuster 40 turns on only the electrical connection of the wiring to the green LED and turns off the electrical connections of the wiring to the other color LEDs to de-energize the other color LEDs in response to the input of the first light color control signal Cs2. Therefore, the RGB-LED tape lights (30a, 30b) emit green light.

In addition, when a yellow color is assigned as a light color indicating the completed state of the machining operation of the machine tool 2, the light color adjuster 40 turns on the electrical connections of the wiring to the red LED and the green LED and turns off the electrical connection of the wiring to the blue LED to de-energize the blue LED in response to the input of the third light color control signal Cs3. Therefore, the RGB-LED tape lights (30a, 30b) emit yellow light. In addition, when a red color is assigned as a light color indicating that the alarm state in the machine tool 2, the light color adjuster 40 turns on only the electrical connection of the wiring to the red LED and turns off the electrical connections of the wiring to the other color LEDs to de-energize the other color LEDs in response to the input of the fourth light color control signal Cs4. Therefore, the RGB-LED tape lights (30a, 30b) emit red light.

The light color control signal generator 8 outputs the light control signals (Cs1 to Cs4) corresponding to the operation statuses of the machine tool 2, but it is efficient to link the light color control signal generator 8 with each process when the predetermined NC machining program P is executed in the control unit 7. In this case, for example, the light color control signal generator 8 may be set such that when the start of the execution of the predetermined NC machining program P is commanded, the light color control signal generator 8 outputs the second light color control signal Cs2, and when the execution of the NC machining program P is completed, the light color control signal generator 8 outputs the third light color control signal Cs3.

In addition, the first light color control signal Cs1 may be output when the main power of the machining center 1 is turned on to operate the machine tool 2. Further, when an alarm signal is generated due to a failure or the like in the machine tool 2, the control unit 7 of the CNC device 5 stops the executed NC machining program P and stops the driving of the machining section 3, the automatic tool changer 4, and the like. Therefore, it is practical that the light color control signal generator 8 is set to output the fourth light color control signal Cs4 in conjunction with the generation of the alarm signal.

The above-described four colors can indicate at least the necessary operation statuses of the machine tool 2, but in the light color control method by switching the power supply to the three color LEDs according to the present embodiment, light colors other than the above-described four colors can be obtained by the other combinations of the color LEDs. This makes it possible to assign other operation statuses of the machine tool to the other light colors. For example, by causing both the red LED and the blue LED to emit light, a purple light color is obtained, and by causing both the green LED and the blue LED to emit light, a sky blue light color is obtained. Of course, a blue light color can be obtained by emitting the light from only the blue LED. These other light colors can be used to grasp statuses other than the above-described operation statuses.

In addition, in the present embodiment, on the front surface area of the exterior cover 10, a punching display section 15 in which a product name and a product number are punched out is provided in the area above the light emitting unit 20b at the left corner (13b) of the door 11. The punching display section 15 is configured such that LED light is transmitted from the back surface side by a separate LED lighting device, which allows the product name and the product number of the target machining center 1 to be easily visually grasped. In this case, the color of LED light emitted by the punching display section 15 is other than the light colors emitted by the RGB-LED tape lights (30a, 30b) in the light emitting units (20a, 20b) to indicate the above-mentioned operation statuses. For example, an emitted blue light color indicated in the above-described Table 1 can be used for the punching display section 15.

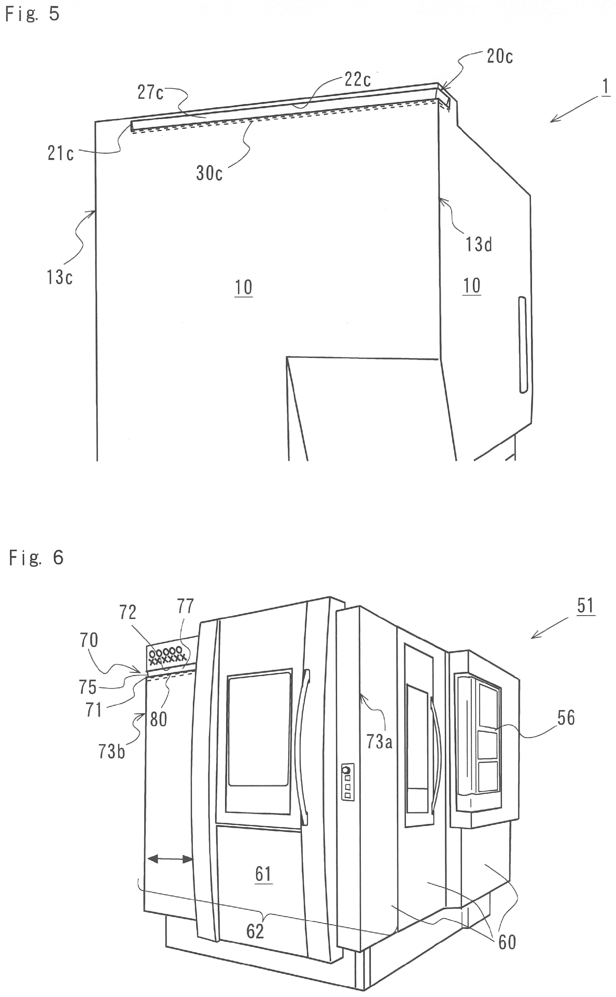

In a case where the machining center 1 is relatively large, and the light emitting unit is also disposed in a corner area on the rear surface side of the exterior cover 10, the area in which the LED light colors can be grasped can be made wider. For example, as illustrated in the rear perspective view of Fig. 5, the light emitting unit 20c can be disposed in an area including the corner 13c out of the left and right corners (13c, 13d) on the rear surface side among the four corners. As illustrated in Fig. 5, since the upper area on the rear surface of the exterior cover 10 does not have a portion that divides the wall surface like the front opening and closing door 11, the rear surface side area of the light emitting unit 20c can be extended long up to the vicinity of the opposing corner 13d.

The light emitting unit 20c mainly has a slit hole 21c perforated in an L shape in the horizontal direction with the back surface side area being longer than the side surface sides, an approximately L-shaped LED tape fixing plate 25c fixed so as to cover the slit hole 21c from the inside of the exterior cover 10 over its entire length, and an RGB-LED tape light 30c held in an L shape on the horizontal bottom surface of the LED tape fixing plate 25c over its entire length.

The RGB-LED tape light 30c can also be connected to the light color adjuster 40 via the branch box B such that the light color is adjusted in synchronization with the other RGB-LED tape lights (30a, 30b).

The LED tape fixing plate 25c has the same cross-sectional shape as that illustrated in Fig. 2, except that the LED tape fixing plate 25c is different in length from the other LED tape fixing plates (25a, 25b). That is, the RGB-LED tape fixing plate 25c has a horizontal bottom surface 26c on which the RGB-LED tape light 30c is attached via its back surface, and an inclined surface extending forward from an upper end of a rising wall on the rear end side of the horizontal bottom surface 26c, and spanning over the RGB-LED tape light 30c to a position above an upper edge of an opening of the slit hole 21c. Then, a horizontal lower end surface of the upper edge of the opening of the slit hole 21c forms a first reflective surface 22c, and the inclined surface forms a second reflective surface 27c. These two types of reflective surfaces (22c, 27c) allow the light from the RGB-LED tape light 30c to illuminate a lower wide area with light from the RGB-LED tape light 30c on the rear surface side of the exterior cover 10.

In addition, as illustrated in Fig. 6, in a relatively small machining center 51 in which a width of the front surface area of an exterior cover 60 is narrow and an opening and closing door 61 is disposed near one of left and right corners (73a, 73b) of a front cover portion 62, a light emitting unit 70 of an LED lighting mechanism may be disposed only at the other corner 73a. A control panel 56 of a CNC device is disposed on a right surface of the exterior cover 60 in the machining center 51, an entire machine tool is constructed compactly within the exterior cover 60. Therefore, the range from which the front and left side surfaces are visible occupies a relatively large area relative to the entire outer periphery of the machining center 51.

The light emitting unit 70 has the same configuration as that of the light emitting unit 20b illustrated in Figs. 1 to 3 descried above, and mainly includes an L-shaped slit hole 71 formed in an elongated area extending in the horizontal direction from a front surface to a left side surface of the corner 73b, an LED tape fixing plate 75 attached so as to close the slit hole 71 from the inside of the exterior cover 60 over its entire length, and an RGB-LED tape light 80 held in an L shape over its entire length on a horizontal bottom surface 76 of the LED tape fixing plate 75.

The LED tape fixing plate 75 has the same cross-sectional shape as that illustrated in Fig. 2, and has a first reflective surface 72 which is a horizontal lower end surface of an upper edge of an opening of the slit hole 71, and a second reflective surface 77 which is an inclined surface, and these two types of reflective surfaces (72, 77) are configured to illuminate a lower wide area with light from the RGB-LED tape light 80, on the rear surface side of the exterior cover 60.

As described above, in the relatively small machining center 51, the L-shaped light emitting unit 70 is simply disposed at the corner 73b, which can secure a larger area, out of the left and right corners (73a, 73b) of the front cover portion 62, but LED light emission can be seen from anywhere in the range where the front and left side surfaces where the light emitting unit 70 is disposed can be seen out of all directions around the outer periphery of the machining center 51.

As described above, the LED lighting mechanism according to the present invention is provided with the L-shaped light emitting unit disposed at at least one corner on the front surface side, among the four corners: front, rear, left, and right corners of the exterior cover. However, by appropriately increasing the number of corners where the light emitting units are disposed based on the size of the machining center, the LED lighting can be more reliably seen in any type of the machining center, and the operation status of the machine tool can be more easily grasped by the light color.

In the above-described embodiment, for each light emitting unit, one RGB-LED tape light is disposed in a row on the horizontal bottom surface of the LED tape fixing plate. However, if the horizontal bottom surface of the LED tape fixing plate is wide enough to secure the installation area, two RGB-LED tape lights may be disposed in two rows to increase the amount of emitted light.

In the above-described embodiment, the light emitting unit is disposed in the L-shaped slit hole formed at the corner of the exterior cover, but the present invention is not limited thereto, and a rectangular shaped hole may be disposed in each side surface.

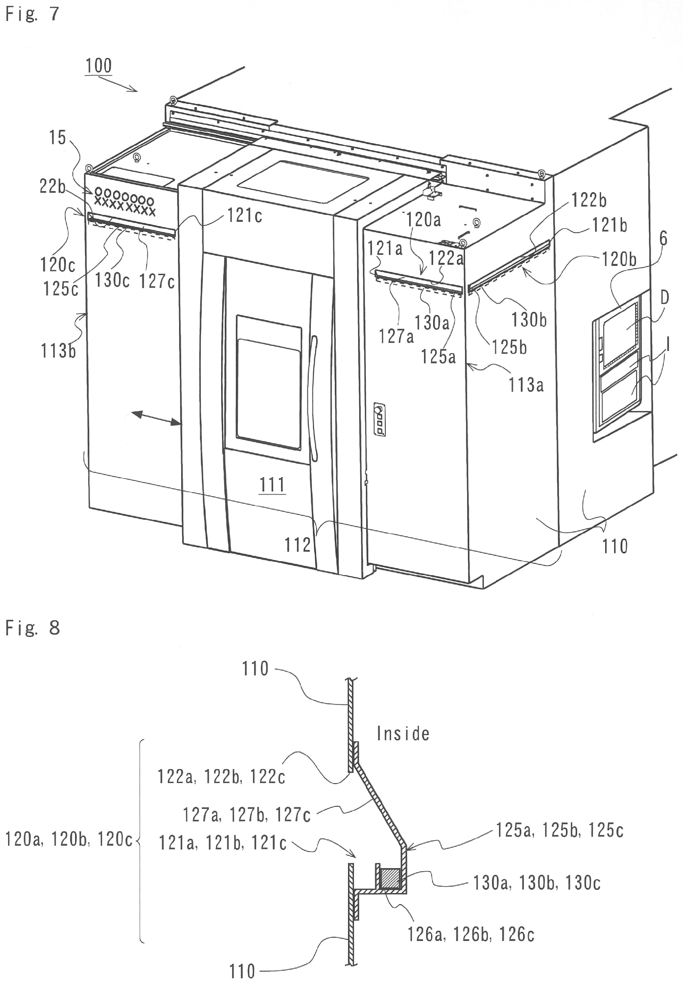

For example, as illustrated in Fig. 7, in a machining center 100 that is of the same type as that illustrated in Fig. 1, a front cover portion 112 includes an opening and closing door 111 at the center. At the left and right corners (113a, 113b) of the front cover portion 112, independent rectangular slit holes (121a, 121b, 121c) that are not continuous in an L-shape are formed on each side surface. By attaching, to back surfaces of the cover inside each slit hole, LED tape fixing plates (125a, 125b, 125c) to which RGB-LED tape lights (130a, 130b, 130c) are fixed, rectangular light emitting units (120a, 120b, 120c) are formed.

As illustrated in Fig. 8, the LED tape fixing plates (125a, 125b, 125c) of the light emitting units (120a, 120b, 120c) have the same cross-sectional shape as that illustrated in Fig. 2 in the above-described embodiment.

That is, the LED tape fixing plates (125a, 125b, 125c) have horizontal bottom surfaces (126a, 126b, 126c) on which the RGB-LED tape lights (130a, 130b, 130c) are attached via the double-sided adhesive tape 36, and inclined surfaces (127a, 127b, 127c) extending forward from upper ends of rising walls at the rear end sides of the horizontal bottom surfaces (126a, 126b, 126c) in the inward direction of the exterior cover, and spanning over the RGB-LED tape lights (130a, 130b, 130c) to positions above lower end surfaces (122a, 122b, 122c) of upper edges of openings of the slit holes (121a, 121b, 121c).

In the light emitting units (120a, 120b, 120c), the lower end surfaces of the upper edges of the openings of the slit holes (121a, 121b, 121c) form the horizontal and smooth first reflective surfaces (122a, 122b, 122c) that reflect light from the RGB-LED tape lights (130a, 130b, 130c) downward, and the first reflective surfaces allow the reflected narrow and sharp LED light to be radiated downward.

The inclined surfaces of the LED tape fixing plates (125a, 125b, 125c) form the smooth second reflective surfaces (127a, 127b, 127c) that reflect and diffuse light from the RGB-LED tape lights (130a, 130b, 130c) downward and forward. The second reflective surfaces allow the LED light is broadly irradiated to the area below and around the exterior cover 10.

As described above, in a case where the plurality of rectangular light emitting units (120a, 120b, 120c) are disposed on the exterior cover 110, the rectangular light emitting units (120a, 120b, 120c) can be easily disposed as the light emitting units having the same shape by preparing and attaching components of the same dimensions and design.

### [List of Reference Signs]

1, 51, 100: machining center
2: machine tool
3: machining section
4 automatic tool changer
M: tool magazine
5: CNC device
6, 56: operation panel
D: display
I: input unit
7: control unit
8: light color control signal generator
Cs (Cs1, Cs2, Cs3, Cs4): light color control signal
9: storage unit
P: NC machining program
F: tool information
10, 60, 110: exterior cover
11, 61, 111: opening and closing door
12, 62, 112: front cover portion
13a, 13b, 13c, 13d, 73a, 73b, 113a, 113b: corner
15: punching display section
20a, 20b, 20c, 70, 120a, 120b, 120c: light emitting unit
21a, 21b, 21c, 71, 121a, 121b, 121c: slit hole
22a, 22b, 22c, 72, 122a, 122b, 122c: first reflective surface (lower end surface of upper edge of opening)
25a, 25b, 25c, 75, 125a, 125b, 125c: LED tape fixing plate
26a, 26b, 26c, 76, 126a, 126b, 126c: horizontal bottom surface
27a, 27b, 27c, 77, 127a, 127b, 127c: second reflective surface (inclined surface)
30, 30a, 30b, 30c, 80, 130a, 130b, 130c: RGB-LED tape light
31: tape-shaped substrate
32: RGB chip LED
33: wiring cord
34: terminal connector
35: waterproof cover
36: double-sided adhesive tape
B: branch box
40: light color adjuster
W: LED power supply wiring
S: power supply circuit

## Claims

1. A machining center including a computerized numerical control (CNC) device that performs numerical control on a machine tool, the machining center comprising
a light emitting diode (LED) display mechanism including a light emitting unit in a part of a front surface area of a front cover portion that is included in an upper portion of an exterior cover enclosing an outer periphery of the machine tool and encloses at least a front compartment of the machine tool in a substantially U-shaped manner, wherein
the LED display mechanism includes, as the light emitting unit,
a slit hole perforated in an elongated shape in a horizontal direction in the exterior cover,
an LED tape fixing plate attached so as to close the slit hole from an inside of the exterior cover along an entire length of the slit hole, and
an RGB-LED tape light that is held along an entire length of the LED tape fixing plate and includes a plurality of chip light emitting diodes each having a red LED, a green LED, and a blue LED embedded therein, arranged at a predetermined interval in a row,
the LED display mechanism includes LED power supply wiring for supplying power to the RGB-LED tape light, and a light color controller that causes the RGB-LED tape light to emit light in a plurality of different light colors that are preset according to various operation statuses of the machine tool,
the LED tape fixing plate has a horizontal bottom surface on which the RGB-LED tape light is attached via its back surface, and an inclined surface extending forward from a rear end side of the horizontal bottom surface in an inward direction of the exterior cover, and spanning over the RGB-LED tape light to a position above an upper edge of an opening of the slit hole, and
a lower end surface of the upper edge of the opening of the slit hole forms a horizontal and smooth first reflective surface that reflects light from the RGB-LED tape light downward, and the inclined surface forms a smooth second reflective surface that reflects and diffuses the light from the RGB-LED tape light downward and forward.

2. The machining center according to claim 1, wherein
the light emitting unit is disposed at at least one of left and right corners of the front cover portion,
the slit hole is formed in an L shape in the horizontal direction continuously across two side surfaces orthogonal to each other at the corner,
the LED tape fixing plate is attached in a substantially L shape so as to close the slit hole along the entire length of the slit hole, and
the RGB-LED tape light is held in an L shape along the entire length of the LED tape fixing plate.

3. The machining center according to Claim 1 or 2, wherein
a control unit of the CNC device includes a light color control signal generator that outputs each light color control signal for commanding the light color controller to emit light in different light colors preset corresponding to each operation status of the machine tool, and
the light color controller is connected between the RGB-LED tape light and the LED power supply wiring, and turns on and off power supply to the red LED, the green LED, and the blue LED in response to the input light color control signal so as to change a color of the light by combining the light emitted by the different LEDs.

4. The machining center according to Claim 3, wherein
the light color control signal includes a first light color control signal for commanding adjustment to a light color indicating a power-on state during a non-machining operation of the machine tool, a second light color control signal for commanding adjustment to a light color indicating that the machine tool is performing a machining operation, a third light color control signal for commanding adjustment to a light color indicating a completed state of the machining operation of the machine tool, and a fourth light color control signal for commanding adjustment to a warning light color indicating an alarm state in the machine tool.
